# EUROPEAN PATENT APPLICATION

(11) **EP 4 675 110 A1**
(43) Date of publication of application: **07.01.2026**
(21) Application number: 23945643.7
(22) Date of filing: 06.11.2023
(51) Int. Cl.: F04D 27/00

(54) **ROTATING SPEED DETERMINATION METHOD AND APPARATUS, AND COMPUTER READABLE STORAGE MEDIUM**

(30) Priority: 18.07.2023 CN 202310880890
(71) Applicant: Contemporary Amperex Technology Co., Limited, Ningde, Fujian 352100 (CN)
(72) Inventor: YE, Weida, Ningde, Fujian 352100 (CN); OUYANG, Shijie, Ningde, Fujian 352100 (CN); LI, Qing, Ningde, Fujian 352100 (CN); HUANG, Xiaoteng, Ningde, Fujian 352100 (CN); LI, Jinkui, Ningde, Fujian 352100 (CN)
(74) Representative: Ziebig Hengelhaupt Intellectual Property Attorneys Patentanwaltskanzlei PartGmbB
(86) International application number: PCT/CN2023/129959
(87) International publication number: WO 2025/015763

(57) **Abstract**

Embodiments of the present application provide a rotating speed determination method and apparatus, and a computer-readable storage medium, which can effectively reduce the impact of noise during operation of a fan without affecting a refrigeration capacity. The method includes: obtaining an ambient temperature and a high pressure at an outlet of a compression apparatus in a target device; and determining an operation rotating speed of a fan in the target device based on the ambient temperature and the high pressure, where the operation rotating speed satisfies a refrigeration requirement of the target device.

## Description

The present application claims priority to Chinese Patent Application No. 202310880890.9, filed on July 18, 2023, entitled "ROTATING SPEED DETERMINATION METHOD AND APPARATUS, AND COMPUTER-READABLE STORAGE MEDIUM", which is incorporated herein by reference in its entirety.

### TECHNICAL FIELD

The present application relates to the technical field of energy storage systems, and in particular, to a rotating speed determination method and apparatus, and a computer-readable storage medium.

### BACKGROUND

With the popularization and application of new energy sources such as solar energy and wind energy, the energy storage technology has also developed. The energy storage system may be applied to various scenarios. If the energy storage system is applied in residential areas, office buildings, or areas close to wildlife protection areas, there is a high requirement on operating noise of the energy storage system according to local regulations.

A liquid cooling unit is a leading noise source of the energy storage system, and the noise of the liquid cooling unit may reach 70 dB to 95 dB during operation, which cannot satisfy the noise requirement in some scenarios.

### SUMMARY

Embodiments of the present application provide a rotating speed determination method and apparatus, and a computer-readable storage medium, which can effectively reduce the impact of noise during operation of a fan without affecting a refrigeration capacity.

According to a first aspect, a rotating speed determination method is provided. The method includes: obtaining an ambient temperature and a high pressure at an outlet of a compression apparatus in a target device; and determining an operation rotating speed of a fan in the target device based on the ambient temperature and the high pressure, where the operation rotating speed satisfies a refrigeration requirement of the target device.

In the embodiments of the present application, on the one hand, the operation rotating speed of the fan is determined based on the ambient temperature. That is, the operation rotating speed of the fan corresponds to the ambient temperature, different ambient temperatures correspond to different operation rotating speeds, the operation rotating speed of the fan is higher when the ambient temperature is higher, and the operation rotating speed of the fan is lower when the ambient temperature is lower. Since the determined operation rotating speed satisfies the refrigeration requirement, the case where the fan still operates at a high rotating speed when the ambient temperature is low is avoided without affecting the refrigeration capacity, effectively reducing the impact of noise during operation of the fan, and thereby improving the customer experience.

On the other hand, in addition to the ambient temperature, the operation rotating speed of the fan is determined also based on the high pressure at the outlet of the compression apparatus. That is, the operation rotating speed of the fan is determined based on a plurality of parameters. Compared with an operation rotating speed of the fan determined based on only one parameter, the operation rotating speed determined based on a plurality of parameters is closer to an ideal rotating speed of the fan in case of the current ambient temperature, and can better satisfy an actual demand of an apparatus (e.g., a battery) connected to the target device.

In some possible embodiments, determining the rotating speed of the fan in the target device based on the ambient temperature and the high pressure includes: determining the operation rotating speed based on the maximum rotating speed limit value and the high pressure, wherein the operation rotating speed is less than or equal to the maximum rotating speed limit value.

In the above technical solution, a rotating speed upper limit of the fan is set based on the ambient temperature. As such, even in the case where other parameters change and the other parameters may cause the operation rotating speed of the fan to increase, a maximum operation rotating speed of the fan may only be the rotating speed upper limit, thereby maintaining low-noise operation at different ambient temperatures while satisfying a refrigeration capacity demand.

In some possible embodiments, the method further includes: obtaining an actual water temperature at an outlet of the target device; and determining the operation rotating speed based on the maximum rotating speed limit value and the high pressure includes: determining the operation rotating speed based on the maximum rotating speed limit value and the high pressure when the actual water temperature does not satisfy a preset water temperature.

In the process of determining the operation rotating speed based on the maximum rotating speed limit value and the high pressure at the outlet of the compressions apparatus, when the actual water temperature cannot satisfy the preset water temperature, for example, the actual water temperature is greater than the target water temperature, even if the operation rotating speed of the fan may increase as the high pressure at the outlet of the compression apparatus increases, due to the setting of the maximum rotating speed limit value, the fan still operates within the range of the maximum rotating speed limit value corresponding to the current ambient temperature. For example, at this time, the maximum operation rotating speed of the fan is the maximum rotating speed limit value.

As such, the refrigeration capacity demand of the target device is satisfied, and the noise during the operation of the fan is within an allowable range, thereby effectively reducing the impact of the noise during the operation of the fan.

In some possible embodiments, determining the maximum rotating speed limit value of the fan based on the ambient temperature includes: determining the maximum rotating speed limit value based on the ambient temperature and a correspondence between the ambient temperature and a rotating speed upper limit value.

In the above technical solution, the maximum rotating speed limit value is determined based on the correspondence between the ambient temperature and the rotating speed upper limit value, which is simple to implement and has high efficiency.

In some possible embodiments, obtaining the ambient temperature includes: obtaining the ambient temperature by using a temperature sensor, where the temperature sensor is disposed at an air inlet of the target device.

Since the ambient temperature is usually an inlet air temperature of the target device, the temperature sensor may be disposed at the air inlet of the target device. As such, the obtained ambient temperature has high precision and is approximate to an actual ambient temperature.

According to a second aspect, a rotating speed determining apparatus is provided. The apparatus includes: an obtaining unit configured to obtain an ambient temperature and a high pressure at an outlet of a compression apparatus in a target device; and a determination unit configured to determine an operation rotating speed of a fan in the target device based on the ambient temperature and the high pressure, where the operation rotating speed satisfies a refrigeration requirement of the target device.

In some possible embodiments, the determination unit is specifically configured to: determine a maximum rotating speed limit value of the fan based on the ambient temperature; and determine the operation rotating speed based on the maximum rotating speed limit value and the high pressure, where the operation rotating speed is less than or equal to the maximum rotating speed limit value.

In some possible embodiments, the obtaining unit is further configured to: obtain an actual water temperature at an outlet of the target device; and the determination unit is specifically configured to: determine the operation rotating speed based on the maximum rotating speed limit value and the high pressure when the actual water temperature does not satisfy a preset water temperature.

In some possible embodiments, the determination unit is specifically configured to: determine the maximum rotating speed limit value based on the ambient temperature and a correspondence between the ambient temperature and a rotating speed upper limit value.

In some possible embodiments, the obtaining unit is specifically configured to: obtain the ambient temperature by using a temperature sensor, where the temperature sensor is disposed at an air inlet of the target device.

According to a third aspect, a rotating speed determining apparatus is provided. The apparatus includes: a processor and a memory, where the memory is configured to store a computer program, and the processor is configured to call the computer program to perform the method according to the first aspect or various implementations of the first aspect.

According to a fourth aspect, a computer-readable storage medium is provided, which is configured to store a computer program that enables a computer to perform the method according to the first aspect or various implementations of the first aspect.

### DESCRIPTION OF DRAWINGS

In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work.

In the drawings, the figures are not drawn to actual scale.
FIG. 1 is a schematic diagram of a liquid cooling unit according to an embodiment of the present application.
FIG. 2 is a schematic flowchart of a rotating speed determination method according to an embodiment of the present application.
FIG. 3 is a schematic diagram of a correspondence between an ambient temperature and a rotating speed upper limit value according to an embodiment of the present application.
FIG. 4 is a schematic block diagram of a rotating speed determination apparatus according to an embodiment of the present application.
FIG. 5 is a schematic block diagram of a rotating speed determination apparatus according to an embodiment of the present application.

### DESCRIPTION OF EMBODIMENTS

The following further describes implementations of the present application in detail with reference to the accompanying drawings and embodiments. The following detailed description of the embodiments and the accompanying drawings are used to describe the principles of the present application by way of example, but are not intended to limit the scope of the present application, that is, the present application is not limited to the described embodiments.

In the description of the present application, it should be noted that, unless otherwise specified, "a plurality of" means two or more, and orientations or positional relationships indicated by the terms "upper", "lower", "left", "right", "inner", "outer", and the like are merely for convenience of description of the present application and simplicity of description, and do not indicate or imply that an apparatus or a component to be referred to must have a specific orientation, or be constructed and operated in a specific orientation, and therefore should not be understood as a limitation on the present application. In addition, the terms "first", "second", "third", and the like are used merely for description purposes, and should not be understood as an indication or implication of relative importance.

Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion. The terms "first", "second", and the like in the specification and claims of the present application or in the accompanying drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. A person skilled in the art explicitly and implicitly understands that the described embodiments in the present application may be combined with another embodiment.

With the popularization and application of new energy sources such as solar energy and wind energy, the energy storage technology has also developed. The energy storage system includes a liquid cooling unit. The liquid cooling unit may use the properties of a coolant with a large heat capacity and capable of taking away excess heat from a battery through circulation, to implement an optimal working temperature condition of the battery.

In the field of new energies, batteries can be used as main power sources of electrical apparatuses (e.g., vehicles, ships, spacecrafts, etc). The battery mentioned in the embodiments of the present application refers to a single physical module including one or a plurality of battery cells to provide a higher voltage and a higher capacity. For example, the battery mentioned in the present application may include a battery module, a battery pack, or the like.

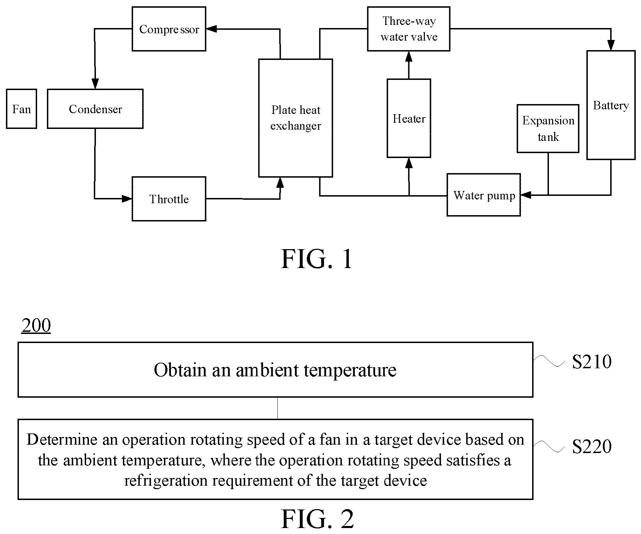

The liquid cooling unit includes components such as a compressor, a condenser, and a plate heat exchanger, where a fan provides air to cause the condenser to perform forced-convection heat exchange with external air. FIG. 1 shows a schematic diagram of the liquid cooling unit. As shown in FIG. 1, the liquid cooling unit is connected to a battery to adjust a temperature of the battery. The liquid cooling unit includes a compressor, a plate heat exchanger, a condenser, a fan, a three-way water valve, a heater, a water pump, an expansion tank, etc. The compressor, the plate heat exchanger, the condenser, the fan, etc. may form a refrigerant loop, and the three-way water valve, the heater, the water pump, the expansion tank, etc. may form a coolant loop.

When the liquid cooling unit operates, the water pump provides power, and a coolant heated by the battery enters a return water collection pipe through a return water port, and then enters an evaporator for heat exchange, to transfer heat to a refrigerant. The refrigerant evaporates in the plate heat exchanger to absorb heat, passes through a drying filter, and becomes a high-pressure refrigerant after compressed by the compressor. The high-pressure refrigerant then enters an air cooling condenser, and heat absorbed by the refrigerant is dissipated into the atmosphere through the fan. A condensed high-pressure low-temperature refrigerant liquid changes back into a low-temperature liquid refrigerant after throttled by the throttle valve and then, and then the low-temperature liquid refrigerant enters the evaporator to form an entire refrigeration cycle.

At the same ambient temperature, the higher the rotating speed of the fan, the higher an air speed on the surface of the condenser, and the better a heat exchange effect. At the same rotating speed of the fan, the lower the ambient temperature, the better the heat exchange effect of the condenser.

When the energy storage system is applied in residential areas, office buildings, or areas close to wildlife protection areas, there is a high requirement on operating noise of the energy storage system according to local regulations. The liquid cooling unit is a leading noise source of the energy storage system, and the noise of the liquid cooling unit may reach 70 dB to 95 dB during operation, which cannot satisfy the noise requirement in some scenarios.

It is found through research that under a non-high temperature working condition, for example, at an ambient temperature of 40°C, the fan operating at 60% of the rotating speed can actually satisfy the refrigeration capacity of the energy storage system. Based on this, an embodiment of the present application provides a rotating speed determination method, to determine an operation rotating speed of a fan in a target device based on an obtained ambient temperature. The operation rotating speed of the fan is determined based on the ambient temperature. That is, the operation rotating speed of the fan corresponds to the ambient temperature, different ambient temperatures correspond to different operation rotating speeds, the operation rotating speed of the fan is higher when the ambient temperature is higher, and the operation rotating speed of the fan is lower when the ambient temperature is lower. Since the determined operation rotating speed satisfies the refrigeration requirement, the case where the fan still operates at a high rotating speed when the ambient temperature is low is avoided without affecting the refrigeration capacity, effectively reducing the impact of noise during operation of the fan, and thereby improving the customer experience.

The rotating speed determination method in this embodiment of the present application may include at least a part of the following content. First, the ambient temperature is obtained, and then the operation rotating speed of the fan in the target device is determined based on the ambient temperature, where the operation rotating speed satisfies a refrigeration requirement of the target device

The target device may be, for example, a liquid cooling unit, and the liquid cooling unit may be connected to a battery.

In this embodiments of the present application, the operation rotating speed of the fan is determined based on the ambient temperature. That is, the operation rotating speed of the fan corresponds to the ambient temperature, different ambient temperatures correspond to different operation rotating speeds, the operation rotating speed of the fan is higher when the ambient temperature is higher, and the operation rotating speed of the fan is lower when the ambient temperature is lower. Since the determined operation rotating speed satisfies the refrigeration requirement, the case where the fan still operates at a high rotating speed when the ambient temperature is low is avoided without affecting the refrigeration capacity, effectively reducing the impact of noise during operation of the fan, and thereby improving the customer experience.

The ambient temperature may be obtained in real time.

Alternatively, the ambient temperature may be obtained periodically. For example, the ambient temperature may be obtained every 5 ms or 10 ms.

Still alternatively, the ambient temperature may be obtained randomly.

Still alternatively, considering that the ambient temperature typically does not change abruptly within a period of time, the ambient temperature may be obtained only once.

The ambient temperature may be obtained by a temperature sensor. Since the ambient temperature is usually an inlet air temperature of the target device, the temperature sensor may be disposed at the air inlet of the target device. As such, the obtained ambient temperature has high precision and is approximate to an actual ambient temperature.

In addition to the ambient temperature, other parameters may also be obtained, and the operation rotating speed of the fan in the target device may be determined based on the ambient temperature and the other parameters. For example, the other parameter may be a high pressure at an outlet of a compression apparatus in the target device.

FIG. 2 shows another schematic flowchart of a rotating speed determination method 200 according to an embodiment of the present application. As shown in FIG. 2, the method 200 may include at least a part of the following content.

S210: Obtain an ambient temperature.

S220: Determine an operation rotating speed of a fan in a target device based on the ambient temperature and the high pressure, where the operation rotating speed satisfies a refrigeration requirement of the target device.

The compression apparatus may be, for example, the compressor mentioned above. The high pressure at the outlet of the compression apparatus may also be referred to as a high pressure of a refrigerant at the outlet of the compression apparatus.

Alternatively, the operation rotating speed may be determined at any time based on the ambient temperature and the high pressure at the outlet of the compression apparatus.

Alternatively, an actual water temperature at an outlet of the target device may be obtained, and when the actual water temperature does not satisfy the preset water temperature, the operation rotating speed is determined based on the ambient temperature and the high pressure at the outlet of the compression apparatus.

The actual water temperature at the outlet of the target device may be obtained by a water temperature sensor. Optionally, the water temperature sensor may be disposed at each of an inlet and an outlet of an apparatus (e.g., the battery) connected to the target device, or the water temperature sensor may be disposed at either the inlet or the outlet of the apparatus connected to the target device.

In this technical solution, in addition to the ambient temperature, the operation rotating speed of the fan is determined also based on the high pressure at the outlet of the compression apparatus. That is, the operation rotating speed of the fan is determined based on a plurality of parameters. Compared with an operation rotating speed of the fan determined based on only one parameter, the operation rotating speed determined based on a plurality of parameters is closer to an ideal rotating speed of the fan in case of the current ambient temperature, and can better satisfy an actual demand of an apparatus (e.g., a battery) connected to the target device.

In some embodiments, S220 may specifically include: determining a maximum rotating speed limit value of the fan based on the ambient temperature, and then determining the operation rotating speed of the fan based on the maximum rotating speed limit value. The operation rotating speed is less than or equal to the maximum rotating speed limit value.

The maximum rotating speed limit value may satisfy the refrigeration requirement of the energy storage system.

If no maximum rotating speed limit value of the fan is set, the fan may operate at a high operation rotating speed in the case where other parameters change and the other parameters may cause the operation rotating speed of the fan to increase, resulting in large noise of the target device. In this technical solution, a rotating speed upper limit of the fan is set based on the ambient temperature. As such, even in the case where other parameters change and the other parameters may cause the operation rotating speed of the fan to increase, a maximum operation rotating speed of the fan may only be the rotating speed upper limit, thereby maintaining low-noise operation at different ambient temperatures while satisfying a refrigeration capacity demand.

Optionally, the maximum rotating speed limit value may be determined based on the obtained ambient temperature and a correspondence between the ambient temperature and a rotating speed upper limit value.

As an example, the correspondence between the ambient temperature and the rotating speed upper limit value may be pre-configured on a rotating speed determination apparatus. The rotating speed determination apparatus may perform the method 200.

For example, the correspondence between the ambient temperature and the rotating speed upper limit value may be pre-configured on the rotating speed determination apparatus in the form of a table. As such, after the ambient temperature is obtained, the maximum rotating speed limit value may be determined by means of internal table lookup.

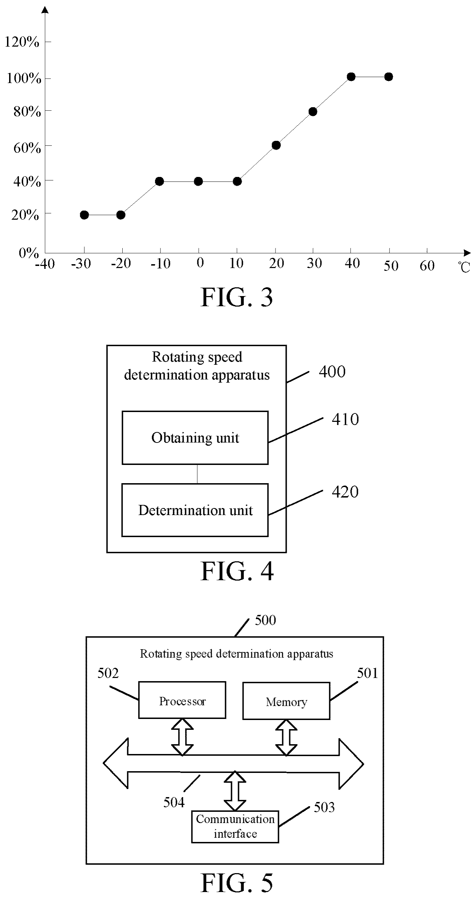

For another example, as shown in FIG. 3, the correspondence between the ambient temperature and the rotating speed upper limit value may be pre-configured on the rotating speed determination apparatus in the manner of a correspondence map. It can be seen from FIG. 3 that the rotating speed upper limit value of the fan is 20% of the rotating speed when the ambient temperature is -30°C and -20°C; the rotating speed upper limit value of the fan is 40% of the rotating speed when the ambient temperature is 0°C; the rotating speed upper limit value of the fan is 60% of the rotating speed when the ambient temperature is 20°C; and the rotating speed upper limit value of the fan is 100% of the rotating speed when the ambient temperature is 50°C. If the obtained ambient temperature is 20°C, it can be determined from FIG. 3 that the maximum rotating speed limit value is 60% of the rotating speed.

As another example, the correspondence between the ambient temperature and the rotating speed upper limit value may be obtained by the rotating speed determination apparatus from another device. For example, it is obtained from a server.

It should be noted that, for different target devices, the correspondence between the ambient temperature and the rotating speed upper limit value may vary.

In the above technical solution, the maximum rotating speed limit value is determined based on the correspondence between the ambient temperature and the rotating speed upper limit value, which is simple to implement and has high efficiency.

After the maximum rotating speed limit value of the fan is determined, the fan may operate at an operation rotating speed lower than or equal to the maximum rotating speed limit value.

As an example, the operation rotating speed should be lower than or equal to the maximum rotating speed limit value. For example, if the maximum rotating speed limit value is 60% of the rotating speed, the fan should operate at an operation rotating speed lower than or equal to 60% of the rotating speed without considering other factors.

As another example, the operation rotating speed of the fan may be determined based on the maximum rotating speed limit value and other parameters.

The other parameters are not specifically limited in this embodiment of the present application. For example, the other parameters may include a parameter of an apparatus (e.g., the battery) connected to the target device, such as a volume, or may also include a current geographic location of the target device.

For another example, when the target device includes the compression apparatus, the other parameter may be, for example, the high pressure at the outlet of the compression apparatus. When the actual water temperature at the outlet of the target device does not satisfy the preset water temperature, for example, the actual water temperature is greater than the target water temperature, a rotating speed of the compression apparatus may be increased, and therefore the high pressure at the outlet of the compression apparatus is increased. The operation rotating speed of the fan may be linearly adjusted based on the high pressure at the outlet of the compression apparatus, that is, the operation rotating speed of the fan may be increased synchronously, thereby increasing the noise of the target device.

The actual water temperature and the preset water temperature may be used as input signals, and a change of the rotating speed of the compression apparatus may be controlled using proportional-integral-derivative (PID), to implement variable frequency control.

Therefore, in this embodiment of the present application, the operation rotating speed may be determined based on the maximum rotating speed limit value and the high pressure at the outlet of the compression apparatus.

In the above technical solution, in addition to the maximum rotating speed limit value, the operation rotating speed of the fan is determined also based on the high pressure at the outlet of the compression apparatus. That is, the operation rotating speed of the fan is determined based on a plurality of parameters. Compared with an operation rotating speed of the fan determined based on only one parameter, the operation rotating speed determined based on a plurality of parameters is closer to an ideal rotating speed of the fan in case of the current ambient temperature, and can better satisfy an actual demand of an apparatus (e.g., a battery) connected to the target device.

Alternatively, the operation rotating speed may be determined at any time based on the maximum rotating speed limit value and the high pressure at the outlet of the compression apparatus.

Alternatively, an actual water temperature at an outlet of the target device may be obtained, and when the actual water temperature does not satisfy the preset water temperature, the operation rotating speed is determined based on the maximum rotating speed limit value and the high pressure at the outlet of the compression apparatus.

In the process of determining the operation rotating speed based on the maximum rotating speed limit value and the high pressure at the outlet of the compressions apparatus, when the actual water temperature cannot satisfy the preset water temperature, for example, the actual water temperature is greater than the target water temperature, even if the operation rotating speed of the fan may increase as the high pressure at the outlet of the compression apparatus increases, due to the setting of the maximum rotating speed limit value, the fan still operates within the range of the maximum rotating speed limit value corresponding to the current ambient temperature. For example, at this time, the maximum operation rotating speed of the fan is the maximum rotating speed limit value.

As such, the refrigeration capacity demand of the target device is satisfied, and the noise during the operation of the fan is within an allowable range, thereby effectively reducing the impact of the noise during the operation of the fan.

In addition to the maximum rotating speed limit value, there is also a requirement for a minimum operation rotating speed of the fan. Therefore, in this embodiment of the present application, the operation rotating speed of the fan may be adjusted based on the ambient temperature, the minimum rotating speed of the fan, and the maximum rotating speed limit value of the fan.

In this embodiment of the present application, sequence numbers of the foregoing processes do not mean execution sequences. The execution sequences of the processes should be determined according to functions and internal logic of the processes, and should not be construed as any limitation on the implementation processes of the embodiments of the present application.

Moreover, under the premise of no conflict, the embodiments described in the present application and/or the technical features in the embodiments may be arbitrarily combined with each other, and the technical solution obtained after the combination should also fall within the scope of protection of the present application.

The rotating speed determination method in the embodiments of the present application is described in detail above, and the rotating speed determination apparatus in the embodiments of the present application will be described in detail below. It should be understood that the rotating speed determination apparatus in the embodiments of the present application may perform the rotating speed determination method in the embodiments of the present application.

FIG. 4 shows a schematic block diagram of a rotating speed determination apparatus 400 according to an embodiment of the present application. As shown in FIG. 4, the rotating speed determination apparatus 400 may include:
an obtaining unit 410 configured to obtain an ambient temperature and a high pressure at an outlet of a compression apparatus in a target device; and
a determination unit 420 configured to determine an operation rotating speed of a fan in the target device based on the ambient temperature and the high pressure, where the operation rotating speed satisfies a refrigeration demand of the target device.

Optionally, in this embodiment of the present application, the determination unit 420 is specifically configured to: determine a maximum rotating speed limit value of the fan based on the ambient temperature; and determine the operation rotating speed based on the maximum rotating speed limit value and the high pressure, where the operation rotating speed is less than or equal to the maximum rotating speed limit value.

Optionally, in this embodiment of the present application, the obtaining unit 410 is further configured to: obtain an actual water temperature at an outlet of the target device; and the determination unit 420 is specifically configured to: determine the operation rotating speed based on the maximum rotating speed limit value and the high pressure at the outlet of the compression apparatus when the actual water temperature does not satisfy a preset water temperature.

Optionally, in this embodiment of the present application, the determination unit 420 is specifically configured to: determine the maximum rotating speed limit value based on the ambient temperature and a correspondence between the ambient temperature and a rotating speed upper limit value.

Optionally, in this embodiment of the present application, the obtaining unit 410 is specifically configured to: obtain the ambient temperature by using a temperature sensor, where the temperature sensor is disposed at an air inlet of the target device.

It should be understood that the rotating speed determination apparatus 400 may implement corresponding operations in the method 200, and for brevity, details are not described herein again.

FIG. 5 is a schematic diagram of a hardware structure of a rotating speed determination apparatus 500 according to an embodiment of the present application. The rotating speed determination apparatus 500 includes a memory 501, a processor 502, a communication interface 503, and a bus 504. The memory 501, the processor 502, and the communication interface 503 implement mutual communicative connection through the bus 504.

The memory 501 may be a read-only memory (ROM), a static storage device, or a random access memory (RAM). The memory 501 may store a program, and when the program stored in the memory 501 is executed by the processor 502, the processor 502 and the communication interface 503 are configured to perform the steps of the rotating speed determination method in the embodiments of the present application.

The processor 502 may be a general-purpose central processing unit (CPU), a microprocessor, an application specific integrated circuit (ASIC), a graphics processing unit (GPU), or one or more integrated circuits, and is configured to execute a related program to implement functions to be performed by units in the apparatus in the embodiments of the present application, or perform the rotating speed determination method in the embodiments of the present application.

The processor 502 may alternatively be an integrated circuit chip, which is capable of signal processing. In an implementation, the steps of the rotating speed determination method in the embodiments of the present application may be completed by an integrated logic circuit of hardware in the processor 502 or instructions in the form of software.

The processor 502 may alternatively be a general-purpose processor, a digital signal processor (DSP), an ASIC, a field programmable gate array (FPGA), or other programmable logic devices, a discrete gate or transistor logic device, or a discrete hardware component. The methods, steps, and logic block diagrams disclosed in the embodiments of the present application may be implemented or executed. The general-purpose processor may be a microprocessor, or the processor may be any conventional processor, etc. The steps of the method disclosed with reference to the embodiments of the present application may be directly performed by a hardware processor, or may be performed using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 501. The processor 502 reads information in the memory 501, to complete, in combination with the hardware thereof, functions to be performed by units included in the rotating speed determination apparatus 500 in the embodiments of the present application, or to perform the rotating speed determination method in the embodiments of the present application.

The communication interface 503 uses, for example, but is not limited to, a transceiving apparatus such as a transceiver to implement communication between the rotating speed determination apparatus 500 and another device or a communication network.

The bus 504 may include a channel for transmitting information between components (for example, the memory 501, the processor 502, and the communication interface 503) of the rotating speed determination apparatus 500.

It should be noted that, although only the memory, the processor, and the communication interface of the rotating speed determination apparatus 500 are shown, in a specific implementation, those skilled in the art should understand that the rotating speed determination apparatus 500 may further include other devices required for implementing normal operation. Meanwhile, according to specific needs, those skilled in the art should understand that the rotating speed determination apparatus 500 may further include hardware devices for implementing other additional functions. In addition, those skilled in the art should understand that the rotating speed determination apparatus 500 may alternatively include only devices required for implementing the embodiments of the present application, and does not have to include all the devices shown in FIG. 5.

An embodiment of the present application further provides a computer-readable storage medium, configured to store a computer program used for performing the method according to the various embodiments of the present application.

The computer-readable storage medium may be a transitory computer-readable storage medium or a non-transitory computer-readable storage medium.

An embodiment of the present application further provides a computer program product, including a computer program stored on a computer-readable storage medium, the computer program including program instructions that, when executed by a computer, cause the computer to perform the rotating speed determination method.

Finally, it should be noted that the above embodiments are used only to illustrate the technical solutions of the present application and are not limitations thereto. Although the present application has been described in detail with reference to the above embodiments, those skilled in the art should understand that: they can still modify the technical solutions recited in the above embodiments or make equivalent substitutions for some of the technical features therein; and these modifications or substitutions do not cause the essence of the corresponding technical solutions to depart from the spirit or scope of the technical solutions of the embodiments of the present application.

## Claims

1. A rotating speed determination method, wherein the method comprises:
obtaining an ambient temperature and a high pressure at an outlet of a compression apparatus in a target device; and
determining an operation rotating speed of a fan in the target device based on the ambient temperature and the high pressure, wherein the operation rotating speed satisfies a refrigeration requirement of the target device.

2. The method according to claim 1, wherein determining the rotating speed of the fan in the target device based on the ambient temperature and the high pressure comprises:
determining a maximum rotating speed limit value of the fan based on the ambient temperature; and
determining the operation rotating speed based on the maximum rotating speed limit value and the high pressure, wherein the operation rotating speed is less than or equal to the maximum rotating speed limit value.

3. The method according to claim 2, wherein the method further comprises:
obtaining an actual water temperature at an outlet of the target device; and
determining the operation rotating speed based on the maximum rotating speed limit value and the high pressure comprises:
determining the operation rotating speed based on the maximum rotating speed limit value and the high pressure when the actual water temperature does not satisfy a preset water temperature.

4. The method according to claim 2 or 3, wherein determining the maximum rotating speed limit value of the fan based on the ambient temperature comprises:
determining the maximum rotating speed limit value based on the ambient temperature and a correspondence between the ambient temperature and a rotating speed upper limit value.

5. The method according to any one of claims 1 to 4, wherein obtaining the ambient temperature comprises:
obtaining the ambient temperature by using a temperature sensor, wherein the temperature sensor is disposed at an air inlet of the target device.

6. A rotating speed determination apparatus, wherein the apparatus comprises:
an obtaining unit configured to obtain an ambient temperature and a high pressure at an outlet of a compression apparatus in a target device; and
a determination unit configured to determine an operation rotating speed of a fan in the target device based on the ambient temperature and the high pressure, wherein the operation rotating speed satisfies a refrigeration requirement of the target device.

7. The apparatus according to claim 6, wherein the determination unit is specifically configured to:
determine a maximum rotating speed limit value of the fan based on the ambient temperature; and
determine the operation rotating speed based on the maximum rotating speed limit value and the high pressure, wherein the operation rotating speed is less than or equal to the maximum rotating speed limit value.

8. The apparatus according to claim 7, wherein the obtaining unit is further configured to:
obtain an actual water temperature at an outlet of the target device; and
the determination unit is specifically configured to:
determine the operation rotating speed based on the maximum rotating speed limit value and the high pressure when the actual water temperature does not satisfy a preset water temperature.

9. The apparatus according to claim 7 or 8, wherein the determination unit is specifically configured to:
determine the maximum rotating speed limit value based on the ambient temperature and a correspondence between the ambient temperature and a rotating speed upper limit value.

10. The apparatus according to any one of claims 6 to 9, wherein the obtaining unit is specifically configured to:
obtain the ambient temperature by using a temperature sensor, wherein the temperature sensor is disposed at an air inlet of the target device.

11. A rotating speed determination apparatus, wherein the apparatus comprises:
a memory configured to store a program; and
a processor configured to execute the program stored in the memory, wherein when the program stored in the memory is executed, the processor is configured to perform the rotating speed determination method according to any one of claims 1 to 5.

12. A computer-readable storage medium, configured to store a computer program that enables a computer to perform the rotating speed determination method according to any one of claims 1 to 5.
